# EUROPÄISCHE PATENTANMELDUNG

(11) **EP 4 122 308 A1**
(43) Veröffentlichungstag der Anmeldung: **25.01.2023**
(21) Anmeldenummer: 22185927.5
(22) Anmeldetag: 20.07.2022
(51) Int. Cl.: A01D 34/04, A01D 34/30

(54) **PORTALSCHNEIDWERK**

(30) Priorität: 21.07.2021 DE 102021118849
(71) Anmelder: ESM Ennepetaler Schneid- u. Mähtechnik GmbH & Co. KG, 58256 Ennepetal (DE)
(72) Erfinder: OEHLER, Wolfgang, 51688 Wipperfürth (DE); NÜRNBERG, Alexander, 58313 Herdecke (DE)
(74) Vertreter: Patentanwälte Dörner & Kötter PartG mbB

(57) **Zusammenfassung**

Die Erfindung betrifft ein Portalschneidwerk umfassend einen Portalrahmen (1), an dem ein Antrieb (2) für ein Doppelmesser-Schneidwerk (3) angeordnet ist und das in der Mitte mit einer Koppeleinrichtung (4) zum Ankoppeln an ein landwirtschaftliches Arbeitsgerät versehen ist, wobei der Antrieb (2) auf einer Seite des Portalrahmens (1) angeordnet ist, wobei die Koppeleinrichtung (4) außermittig eine Pendellagerung aufweist.

## Beschreibung

Die Erfindung betrifft ein Portalschneidwerk mit den Merkmalen des Oberbegriffs des Patentanspruchs 1.

Portalschneidwerke an sich sind bekannt (vgl. bspw. DE 29 15 245 A1). Diese weisen einen Antriebsaufbau auf, der von einem landwirtschaftlichen Arbeitsgerät angetrieben wird. Der Antrieb des Schneidwerks erfolgt über einen Antriebsstrang, der eine Stange umfasst, die an einem oberen Rahmenteil angeordnet ist. An den äußeren Enden ist die Stange über ein Gelenk mit einem Schwinghebel verbunden, der in seinem mittleren Bereich schwenkbar am Portalrahmen befestigt ist und an seinem der Stange abgewandten Ende mit dem Ober- bzw. Untermesser des Doppelmesser-Schneidwerks verbunden ist.

Darüber hinaus sind Portalschneidwerke bekannt, die über einen einseitigen Mähantrieb verfügen (vgl. bspw. DE 1 507 421 A1). Bei diesen ist der Antrieb von einem Kurbelantrieb und einem Motor gebildet, der an einer Seite des Portalrahmens angeordnet ist. Der Motor wird in der Regel hydraulisch angetrieben, wobei die Versorgung des Motors mit Hydraulikflüssigkeit von dem landwirtschaftlichen Trägergerät bereitgestellt wird. Der Motor ist über einen Kurbelantrieb mit dem Ober- bzw. Untermesser des Doppelmesser-Schneidwerks verbunden.

Aufgrund des an der einen Seite vorgesehenen Kurbelantriebs mit Motor, ergibt sich bei dieser Art von Portalschneidwerken ein Gewichtsunterschied zwischen den beiden Seiten des Schneidwerks, soweit das Portalschneidwerk in seiner Mitte an das landwirtschaftliche Trägergerät angekoppelt ist. Um diesen Gewichtsunterschied zu kompensieren, finden nach dem Stand der Technik manuell zuschaltbare, gewichtsausgleichende Pendelkoppeleinheiten Anwendung. Diese weisen jedoch den Nachteil auf, dass sie dauerhaft unter einer Vorspannung betrieben werden müssen. Zum Abkoppeln des Schneidwerks von dem Trägergerät ist es daher erforderlich, aus Sicherheitsgründen zunächst die Pendelkoppeleinheit zu entkoppeln. Hinzu kommt, dass die genannte Vorspannung der Pendelkoppeleinheiten das Kopieren des Bodens erschwert und die Manövrierfähigkeit des Trägergeräts erschwert.

Zur Kompensation des Gewichtsunterschieds sind auch Lösungen bekannt, bei denen der Portalrahmen eine außermittige Kopplung mit dem Trägergerät erfolgt. Eine solche Kopplung weist jedoch den Nachteil auf, dass bei einer breiten Bereifung des Trägergeräts, bspw. bei einer Doppel- oder Zwillingsbereifung oder auch bei Verwendung von Stachelwalzen, es zu einem Überrollen von noch nicht geschnittenem Mähgut kommen kann. Zudem führt die außermittige Kopplung zu einer asymmetrischen Gesamtanordnung, wodurch die Manövrierfähigkeit beim Umfahren von Bäumen, Zäunen, Masten o. dgl. verschlechtert ist. Außerdem kann eine solche nicht feder-elastisch gelagerte außermittige Kopplung zu einer unbestimmten Pendelwinkellage des Schneidwerks führen, sobald es den Kontakt zum Boden verliert.

Hier will die Erfindung Abhilfe schaffen. Der Erfindung liegt die Aufgabe zugrunde, ein Portalschneidwerk mit einseitig angeordnetem Antrieb zu schaffen, welches die Pendelbewegung des Schneidwerks um die horizontale Achse aufgrund der Gewichtsunterschiede zwischen den beiden Seiten des Schneidwerks ausgleicht. Gemäß der Erfindung wird diese Aufgabe mit den Merkmalen des Patentanspruchs 1 gelöst.

Mit der Erfindung ist ein Portalschneidwerk mit einseitig angeordnetem Antrieb geschaffen, welches die Pendelbewegung des Schneidwerks um die horizontale Achse aufgrund der Gewichtsunterschiede zwischen den beiden Seiten des Schneidwerks ausgleicht. Dies ist durch die aus der Mitte in Richtung der Antriebsseite verlegte Pendelachse bewirkt. Durch die außermittige Anordnung der Pendelachse erfolgt ein Ausgleich der unterschiedlichen Gewichte zwischen den beiden Seiten des Schneidwerks. Gleichzeitig ist die mittige Koppelung an das Arbeitsgerät beibehalten, so dass die beschriebenen Nachteile bei einer außermittigen Kopplung an das Arbeitsgerät vermieden sind.

Nachfolgend sind für das Verständnis der vorliegenden Erfindung einzelne Begrifflichkeiten definiert:
Schneidwerk: Unter einem Schneidwerk ist in dieser Anmeldung die Gesamtheit aus Balkenrücken, Messer-Führungselementen und Mähmessern, inkl. Schnittstelle zum Traggestell und zum oszillierenden Antrieb zu verstehen.
Portalmähwerk: Unter einem Portalmähwerk ist in dieser Anmeldung die Gesamtheit aus Schneidwerk, Antrieb und Rahmen (Traggestell) einschließlich Schnittstelle zum Trägergerät zu verstehen.
Pendelachse: Unter einer Pendelachse ist in dieser Anmeldung die Achse zu verstehen, um die sich das Portalmähwerk relativ zum Trägergerät bewegen kann, bspw. um Bodenunebenheiten auszuweichen.

In Weiterbildung der Erfindung umfasst die Pendellagerung ein Stabelement, das von einer Schelle umgeben ist. Diese Gestaltung führt zu einer technischen einfachen und zugleich sehr stabilen Lagerung des Schneidwerks hervorgerufen.

Bevorzugt ist das Stabelement im Bereich der Schelle von mindestens einem Gummielement umgeben. Durch diese Ausgestaltung ist eine gummielastische Lagerung geschaffen, welche Pendelbewegungen des Schneidwerks dämpft.

In Ausgestaltung der Erfindung ist an der Koppeleinrichtung ein Stützfuß angeordnet. Der Stützfuß ermöglicht ein Abstellen des Schneidwerks im vom Trägergerät abgekoppelten Zustand derart, dass es auf den in Bodenkontakt stehenden Komponenten des Schneidwerks und Stützfuß kippsicher steht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

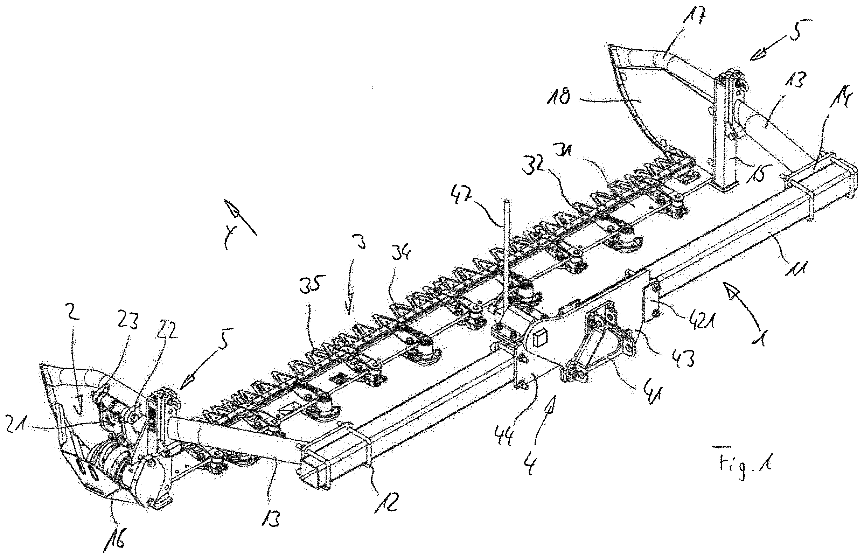

- Figur 1: die dreidimensionale Darstellung eines erfindungsgemäßen Portalschneidwerk;

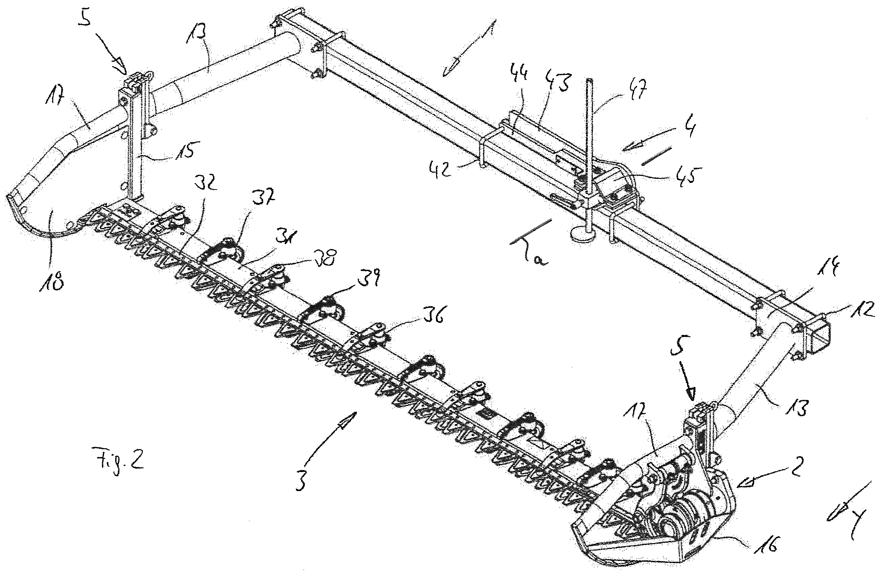

- Figur 2: die dreidimensionale Darstellung des in Figur 1 dargestellten Portalschneidwerks aus einer anderen Perspektive;
- Figur3: die Ansicht des in Figur 1 dargestellten Portalschneidwerks in Arbeitsrichtung gesehen;
- Figur 4: die dreidimensionale Darstellung einer Koppeleinrichtung;
- Figur 5: die dreidimensionale Darstellung der in Figur 4 dargestellten Koppeleinrichtung aus einer anderen Perspektive.

Das erfindungsgemäße Portalschneidwerk umfasst einen Portalrahmen 1, an dem auf einer Seite ein Antrieb 2 für ein Doppelmesser-Schneidwerk 3 angeordnet ist. Im Ausführungsbeispiel ist der Antrieb 2 an einem Ende des Doppelmesser-Schneidwerks 3 angeordnet. An dem Portalrahmen 1 ist in der Mitte eine Koppeleinrichtung 4 zum Ankoppeln des Portalschneidwerks an ein - nicht dargestelltes - landwirtschaftliches Arbeitsgerät vorgesehen. Der Portalrahmen 1 ist mit einem Schwenkmechanismus 5 versehen.

Der Portalrahmen 1 weist ein Vierkantrohr 11 auf, welches horizontal ausgerichtet ist. An seinen beiden Enden sind Zurrbügel 12 angeordnet, mit deren Hilfe Holmrohre 13 an dem Vierkantrohr 11 geklemmt gehalten sind. Hierzu weisen die Holmrohre 13 an ihrem einen Ende Befestigungsplatte 14 auf, die im Ausführungsbeispiel mit den Holmrohren 13 verschweißt sind. An dem dem Vierkantrohr 11 abgewandten Ende schließt sich an die Holmrohre 13 ein Vertikalelement 15 an.

Das Vertikalelement 15 ist Bestandteil eines Außenschuhs 16 und von einem Vierkantrohr gebildet. An seinem dem Boden zugewandten Ende ist an dem Vertikalelement 15 der Außenschuh 16 vorgesehen. An dem Außenschuh 16 ist das Doppelmesser-Schneidwerk 3 befestigt. In dem dem Boden abgewandten Bereich ist an dem Vertikalelement 15 ein Rohr 17 befestigt, welches an seinem dem Vertikalelement 15 abgewandten Ende mit dem Außenschuh 16 in Kontakt steht. Zwischen dem Vertikalelement 15, dem Außenschuh 16 und dem Rohr 17 ist ein Schwadblech 18 angeordnet.

Auf der in Arbeitsrichtung y gesehenen linken Seite des Portalschneidwerks ist auf dem Außenschuh 16 der Antrieb 2 angeordnet. Dieser besteht im Ausführungsbeispiel aus einem Hydraulikmotor, der von der Hydraulik des Arbeitsgeräts betrieben wird. Der Antrieb 2 umfasst eine Kurbelwelle, an deren Kurbeln Pleuel befestigt sind. Die Pleuel sind mit ihrem der Kurbelwelle abgewandten Ende an sichelförmigen Schwinghebeln 21 befestigt. Die Schwinghebel 21 sind an ihrem dem Boden abgewandten Ende beweglich an einem Bolzen 22 gelagert, welcher in einer Bohrung in Flanschen 23 montiert sind. Erkennbar sind die Schwinghebel 21 in diesem Bereich benachbart zur Längsmittellinie des Rohrs 17 angeordnet.

An ihrem dem Boden zugewandten Ende sind die Schwinghebel 21 jeweils mit einer Bohrung versehen, die zur Befestigung von Kugelgelenken dient. Die Kugelgelenke bilden die Verbindung zu den Messern des Doppelmesser-Schneidwerks 3. Der Antrieb der Schwinghebel 21 erfolgt mit Hilfe der Pleuel. Hierzu weisen die Schwinghebel 21 in ihrem konvex gekrümmten Bereich jeweils eine Bohrung auf, durch die Schrauben hindurchtreten. Eine Drehbewegung der Kurbelwelle 21 führt zu einer oszillierenden Hin- und Her-Bewegung der Pleuelköpfe und dies wiederum zu einer Schwingbewegung der in den Flanschen 23 gelagerten Schwinghebel 21. Andere Antriebsarten sind in Abwandlung des Ausführungsbeispiels ebenfalls möglich.

Das Doppelmesser-Schneidwerk 3 umfasst einen Balkenrücken 31, an dem ein Messerrücken 32 für ein Obermesser und ein Messerrücken 33 für ein Untermesser angeordnet ist, welche über die Schwinghebel 21 oszillierend hin- und hergehend angetrieben sind. An dem Messerrücken 32 für das Obermesser sind eine Vielzahl von Schneidelementen 34, an dem Messerrücken 33 für das Untermesser eine Vielzahl von Schneidelementen 35 befestigt. An dem Balkenrücken 31 sind Messerführungen angeordnet, die Führungsbaugruppen 36 für das Obermesser und Führungsbaugruppen 37 für das Untermesser umfassen. An den Führungsbaugruppen 36 sind Führungsarme 38, an den Führungsbaugruppen 37 Führungsarme 39 befestigt, welche jeweils an den freien Enden über eine Kombination von Buchsen mit Führungszapfen mit den an den Messerrücken 32, 33 angeordneten Schneidelementen 34, 35 zusammenwirken.

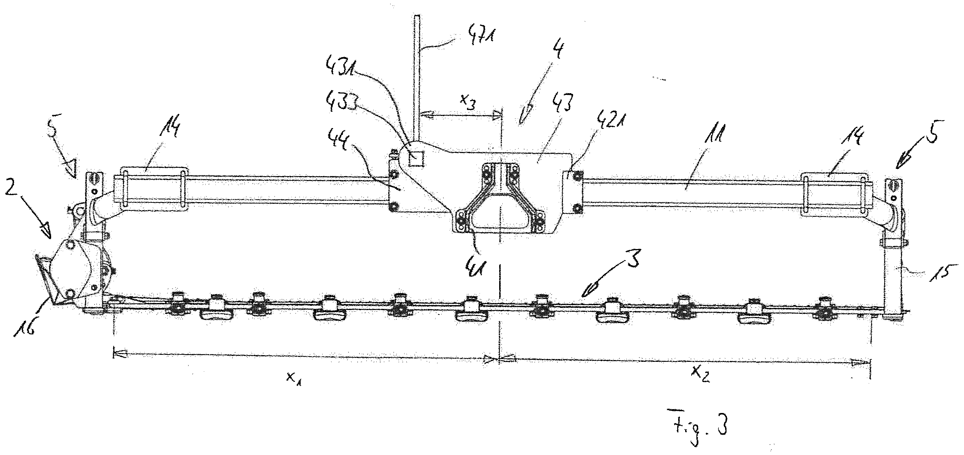

Die Koppeleinrichtung 4 ist in der Mitte des Schneidbereichs an dem Vierkantrohr 11 angeordnet. Der Abstand x₁ der Koppeleinrichtung 4 zum in Arbeitsrichtung y gesehen linken Ende des Schneidwerks 3 ist folglich gleich dem Abstand x₂ zum rechten Ende des Schneidwerks 3 (vgl. Figur 3). Die Koppeleinrichtung 4 weist auf ihrer dem landwirtschaftlichen Arbeitsgerät zugewandten Seite einen dreieckförmigen Koppelrahmen 41 zum Anbau an das Arbeitsgerät auf. Der Koppelrahmen 41 ist mit einer Pendelplatte 43 verschraubt. Es ist eine Hauptkonsole 44 vorgesehen, welche mit Hilfe von Zurrbügeln 42 an dem Vierkantrohr 11 geklemmt gehalten ist. Die Pendelplatte 43 ist auf ihrer einen Seite von dem dortigen Zurrbügel 42 und einer Klemmplatte 421 an dem Vierkantrohr 11 befestigt.

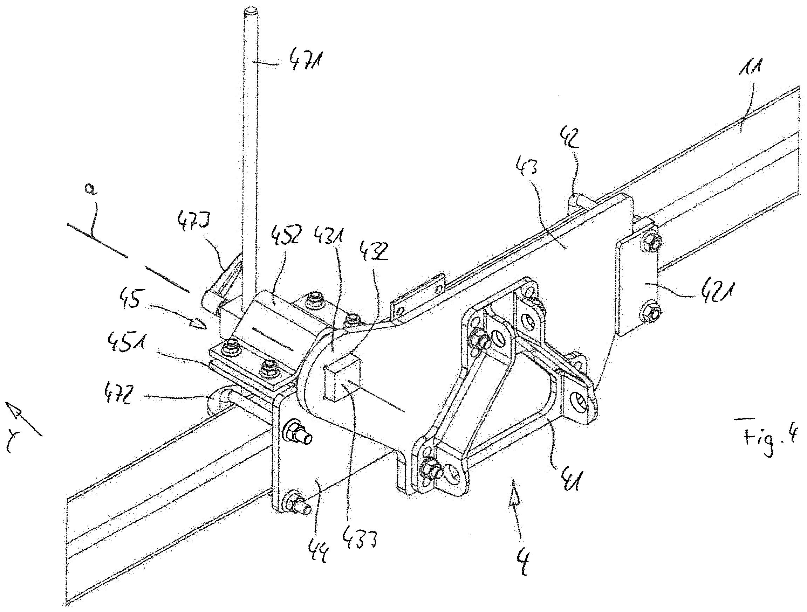

An der Koppeleinrichtung 4 ist außermittig, nämlich dem Antrieb 2 zugewandt, eine Pendellagerung vorgesehen. Hierzu ist die Pendelplatte 43 asymmetrisch ausgebildet ist. Sie weist auf ihrer dem Antrieb 2 zugewandten Seite einen Ausleger 431 auf, in dem eine Öffnung 432 vorgesehen ist. Im Ausführungsbeispiel ist die Öffnung 432 viereckig ausgebildet. Andere mehreckige oder runde Formen, bspw. ovale Formen, sind ebenfalls möglich. Durch die Öffnung 432 tritt ein Stabelement 433, welches sich in einen Bereich oberhalb des Vierkantrohrs 11 erstreckt. Der Querschnitt des Stabelements 433 entspricht dem Querschnitt der Öffnung 432. Das Stabelement 433 ist daher verdrehsicher in der Öffnung 432 angeordnet. Im Ausführungsbeispiel ist das Stabelement 433 in der Öffnung 432 und folglich mit der Pendelplatte 43 verschweißt. Es ist somit gleichzeitig eine axiale Fixierung des Stabelements 433 hervorgerufen. Wie insbesondere Figur 3 zu entnehmen ist, ist das Stabelement 433 um einen Abstand x₃ aus der Mitte in Richtung des Antriebs 2 versetzt positioniert. Die erfindungsgemäße Pendellagerung ermöglicht eine außermittige Pendelbewegung des Schneidwerks um die horizontale und parallel zur Längsmittellinie des Arbeitsgeräts ausgerichtete Pendelachse a (vgl. Figur 4).

Im Bereich oberhalb des Vierkantrohrs 11 ist das Stabelement 433 von einer Schelle 45 umgeben. Die Schelle 45 besteht aus einem Schellen-Unterteil 451 und einem Schellen-Oberteil 452. Das Schellen-Unterteil 451 ist mit der Hauptkonsole 44 fest verbunden. Im Ausführungsbeispiel ist das Schellen-Unterteil 451 mit der Hauptkonsole 44 verschweißt. Das Schellen-Unterteil 451 steht in montiertem Zustand der Koppeleinrichtung mit dem Vierkantrohr 11 in Kontakt.

Das Stabelement 433 ist im Bereich der Schelle 45 von mehreren Gummielementen 46 umgeben. Im Ausführungsbeispiel sind vier Gummielemente 46 vorgesehen. Andere Ausgestaltungen sind ebenfalls möglich, bspw. eine ringförmige Ausgestaltung eines einzigen Gummielements, welches das Stabelement 433 umgibt. In montiertem Zustand sind das Schellen-Unterteil 451 und das Schellen-Oberteil 452 gegeneinander mit Hilfe von Schrauben 453 verspannt. Gleichzeitig ist das Stabelement 433 gummielastisch in der Schelle 45 gelagert.

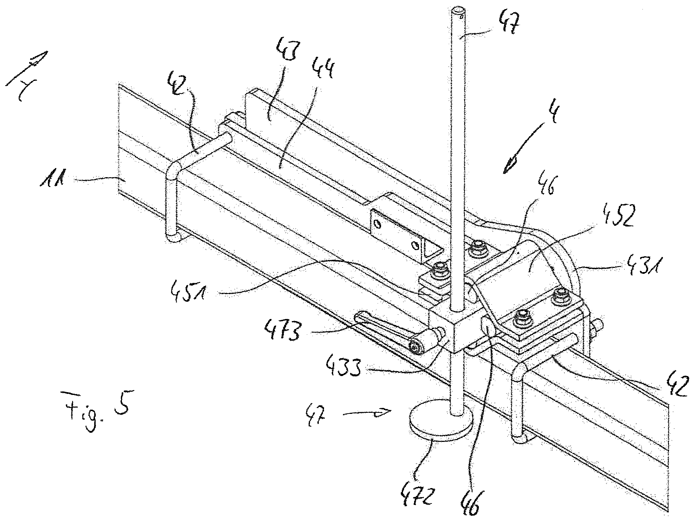

Das Stabelement 433 ist an seinem dem Arbeitsgerät abgewandten Ende mit einer senkrechten Bohrung 434 versehen, in der ein Stützfuss 47 angeordnet ist (vgl. insbesondere Figur 5). Der Stützfuß 47 besteht aus einer Stange 471, die an ihrem dem Boden zugewandten Ende mit einer Aufstellplatte 472 versehen ist. Der Stützfuß 47 ist in dem Stabelement 433 höhenverstellbar klemmbar. Hierzu ist im Ausführungsbeispiel an dem stirnseitigen Ende des Stabelements 433 ein Handhebel 473 vorgesehen, durch dessen Betätigung die Klemmung des Stützfußes 47 gelöst bzw. vorgenommen werden kann.

Die außermittige Anordnung der Pendellagerung auf der dem Antrieb 2 zugewandten und folglich ein höheres Gewicht aufweisenden Seite hat eine ausgeglichene Pendelstellung des Portalschneidwerks um die horizontale Pendelachse a zur Folge. Es werden somit die unterschiedlichen Drehmomente der beiden Seiten des Portalschneidwerks ausgeglichen, die durch den Gewichtsunterschied aufgrund des einseitig angeordneten Antriebs 2 hervorgerufen sind. Gleichzeitig ist erfindungsgemäß der im Vergleich zu einem asymmetrischen Anbau an das Arbeitsgerät vorteilhafte mittenzentrierte Anbau des Portalschneidwerks an das Arbeitsgerät möglich.

Die erfindungsgemäße Gestaltung hat zudem den Vorteil, dass auch im ausgehobenen Zustand des Portalschneidwerks, also in einem Zustand, in dem das Portalschneidwerk keinen Bodenkontakt hat, dieses horizontal ausgerichtet ist. Das ist insbesondere bei Verladearbeiten oder im Vorgewende vorteilhaft. Darüber hinaus ist die gummielastische Lagerung nicht anfällig gegen Korrosion und gleichzeitig wartungsarm.

## Patentansprüche

1. Portalschneidwerk umfassend einen Portalrahmen (1), an dem ein Antrieb (2) für ein Doppelmesser-Schneidwerk (3) angeordnet ist und das in der Mitte mit einer Koppeleinrichtung (4) zum Ankoppeln an ein landwirtschaftliches Arbeitsgerät versehen ist, wobei der Antrieb (2) auf einer Seite des Portalrahmens (1) angeordnet ist, **dadurch gekennzeichnet, dass** die Koppeleinrichtung (4) außermittig eine Pendellagerung aufweist.

2. Portalschneidwerk nach Anspruch 1, **dadurch gekennzeichnet, dass** die Pendellagerung auf der dem Antrieb (2) zugewandten Seite der Koppeleinrichtung (4) vorgesehen ist.

3. Portalschneidwerk nach Anspruch 1 oder 2, **dadurch gekennzeichnet, dass** die Pendellagerung ein Stabelement (433) umfasst, das von einer Schelle (45) umgeben ist.

4. Portalschneidwerk nach Anspruch 3, **dadurch gekennzeichnet, dass** das Stabelement (433) im Bereich der Schelle (45) von mindestens einem Gummielement (46) umgeben ist.

5. Portalschneidwerk nach Anspruch 3 oder 4, **dadurch gekennzeichnet, dass** das Stabelement (433) verdrehsicher an der Koppeleinrichtung (4) angeordnet ist.

6. Portalschneidwerk nach einem der vorgenannten Ansprüche, **dadurch gekennzeichnet, dass** an der Koppeleinrichtung (4) ein Stützfuß (47) angeordnet ist.

7. Portalschneidwerk nach Anspruch 6, **dadurch gekennzeichnet, dass** der Stützfuß (47) in dem Stabelement (433) höhenverstellbar angeordnet ist.
